(19) **Europäisches Patentamt European Patent Office Office européen des brevets**

(11) **EP 4 403 808 B1**

(12) # EUROPEAN PATENT SPECIFICATION

(45) Date of publication and mention of the grant of the patent:
**24.12.2025  Bulletin 2025/52**

(21) Application number: **22885570.6**

(22) Date of filing: **28.09.2022**

(51) International Patent Classification (IPC):
*F16K 27/06* (2006.01)    *F16K 27/08* (2006.01)
*F16K 5/08* (2006.01)

(52) Cooperative Patent Classification (CPC):
**F16K 27/08; F16K 5/0626; F16K 5/0647;
F16K 5/08; F16K 27/067**

(86) International application number:
**PCT/CN2022/122171**

(87) International publication number:
**WO 2023/071685 (04.05.2023 Gazette 2023/18)**

(54) **BALL VALVE**

KUGELVENTIL

ROBINET À TOURNANT SPHÉRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.10.2021  CN 202122654724 U**

(43) Date of publication of application:
**24.07.2024  Bulletin 2024/30**

(73) Proprietor: **Zhejiang Dunan Artificial Environment
Co., Ltd.
Shaoxing
Zhejiang 311835 (CN)**

(72) Inventors:
• **SHOU, Zhouyang
Shaoxing, Zhejiang 311835 (CN)**

• **XUAN, Yongbin
Shaoxing, Zhejiang 311835 (CN)**

(74) Representative: **Meyer-Dulheuer MD Legal
Patentanwälte PartG mbB
Hanauer Landstr. 287-289
60314 Frankfurt am Main (DE)**

(56) References cited:
AU-A- 3 444 495     CN-A- 101 285 529
CN-A- 101 392 841    CN-A- 101 392 841
CN-A- 102 287 569    CN-A- 102 359 616
CN-A- 110 397 752    CN-U- 216 112 404
CN-U- 217 381 703    CN-Y- 201 339 725
KR-Y1- 200 319 367   KR-Y1- 200 319 367
US-A- 3 743 243

**Description**

**CROSS-REFERENCE TO RELATED APPLICATION**

This application claims priority to Chinese Patent Application No. 202122654724.6, filed on October 29, 2021, and titled "BALL VALVE".

**TECHNICAL FIELD**

The present invention relates to the field of flow control technology, and in particular, to a ball valve.

**BACKGROUND**

A ball valve is a type of valve that utilizes a ball as an opening and closing element. Typically, the ball valve is driven by a valve rod and can rotate around an axis of the valve rod.

During the operation of the ball valve, the valve rod drives the ball to rotate within the valve body by only 90 degrees, enabling the ball valve to function as an on-off valve. At present, a common method to restrict rotation of the ball driven by the valve rod is to place a boss on an end surface of the valve seat in the ball valve. A limit pin (or a limit piece) is then attached to the valve rod to constrain the rotation angle of the valve rod by a contact between the boss and the limit pin (or the limit piece). However, installing the limit pin (or the limit piece) on the valve rod can be challenging, requiring high processing costs. Moreover, the material costs of the limit pin (or the limit piece) and the boss is high.

KR200319367Y1 discloses a ball valve, which including: a valve body having a plurality of openings formed therein, a stem insertion port is provided above the ball space, and a stem connected to the operating ball is protruded from the stem insertion port, wherein the stem is inserted into the stem insertion port. And a stopper for controlling the stopper. The stem cover is attached to the stem insertion port. The stem cover has a stem protruding upward from the stem insertion port at the center. The stopper is opposed to the actuating hole so that the stem can be rotated 90 degrees in the left and right direction.

CN 101392841A discloses an operating mechanism for operating a switch valve. The operating mechanism consists of a valve rod, a valve core body combined with the lower end of the valve rod, and a hollow annular stopper ring combined with the upper end of the valve rod. The inside of the stopper ring is provided with a pair of opposite steps and the upper end of the valve rod moves between the steps.

CN 201339725Y discloses a spacing ring for a valve and a valve adopting the spacing ring. The spacing ring comprises a circular ring body, and two bulges for limiting the rotation angle of the valve handle are distributed inside the circular ring body, to limit the opening and closing of the valve. A positioning component which can be embedded into the valve body is arranged outside the circular ring body, pressed by a pressing cap and matched with the ring.

CN 101285529A discloses an integrated metal ball valve includes a valve body, a valve core, a valve rod and a handle which are made of metal materials, the valve core is positioned inside the valve body; the inner end of the valve rod is connected with the valve core, while the outer end extends out of the valve body to be connected with the handle; the valve body is of an integral structure; the side part of the valve body has a mounting hole communicated with the intracavity of the valve body; the aperture of the mounting hole is slightly more than the outer diameter of the valve core; a valve cap connected with the valve body is arranged on the mounting hole; the valve rod passes through the valve cap; and the valve rod and the valve core are of an integrated structure.

CN 102287569A discloses an H-shaped valve provided with a valve stem position limiting structure, which comprises a valve body provided with two valve stem sleeves, and two valve stems matched with the valve stem sleeves separately, the inner diameter of the valve stem sleeve, for a section from the end face, shrinks towards the center at symmetrically opposite parts of the inner circle; the upper end face of a middle section of the valve stem contacts to the lower end face of the inner diameter shrinking parts of the valve stem sleeve; the valve stem is turned within a limited range. The invention is characterized in that the valve stem sleeve is provided with limiting bulges formed by extending towards the center from the inner diameter shrinking parts; the valve stem is provided, on the upper end face, with a turned block which works meeting the limiting bulges; the maximum outer diameter of the turned block is less than the formed inner diameter of the shrinking parts, and is greater than the inner diameter of the limiting bulges.

**SUMMARY**

According to various embodiments of the present disclosure, a ball valve is provided.

The invention is set out in the appended set of claims. The present invention provides a ball valve. The ball valve includes a valve body, an end cover and a valve rod. The end cover is installed on the valve body, and one end of the valve rod is rotatably installed in the valve body, the other end of the valve rod extends out of the valve body through the end cover. A limiting member is arranged on an inner peripheral wall of the end cover, the valve rod is capable of being limited by the limiting member to allow a maximum rotating angle of the valve rod in the end cover to be 90 degrees.

In some embodiments, the valve rod is capable of being limited by the limiting member in a surface-to-surface contact manner.

In some embodiments, the limiting member is provided with a first abutting surface and a second abutting surface, the first abutting surface is perpendicular to the second abutting surface, the limiting member is capable of limiting the valve rod through the first abutting surface and the second abutting surface respectively.

In some embodiments, a rotating radius of the valve rod is defined as $R$, a half of a thickness of an end of the valve rod extending out of the valve body is defined as $L$, and a width of an end surface of the limiting member for abutting against the valve rod is defined as $I$, wherein, the radius $R$ of rotation of the valve rod, the half $L$ of a thickness of an end of the valve rod extending out of the valve body and the width $I$ of an end surface of the limiting member for abutting against the valve rod satisfy following formula: $I = \sqrt{R^2 - L^2} - L$.

In some embodiments, the number of the limiting member is one. Alternatively, the number of the limiting member is two, and the two limiting members are symmetrical with respect to an axis of the valve rod.

In some embodiments, the limiting member is disposed on the inner peripheral wall of the end cover by welding. Alternatively, the limiting member and the end cover are an integrated structure.

According to the claimed invention, a projection of the inner peripheral wall of the end cover toward the limiting member is capable of covering the limiting member.

In some embodiments, the valve rod is provided with a first step surface, and an end surface of the limiting member towards the valve body abuts against the first step surface.

In some embodiments, the valve rod is provided with a second step surface and the second step surface abuts against an end surface of the end cover towards the valve body.

In some embodiments, a valve seat is fixed on the valve body by welding, and the end cover is connected to the valve seat by a threaded way.

In some embodiments, the valve rod is capable of being limited by the limiting member in a line-to-surface contact manner.

Details of one or more embodiments of this application are presented in the attached drawings and descriptions below. And other features, purposes and advantages of this application will become apparent from the description, drawings and claims.

## BRIEF DESCRIPTION OF THE DRAWINGS

For a better description and illustration of embodiments and/or examples of those inventions disclosed herein, reference may be made to one or more attached drawings. Additional details or examples used to describe the drawings should not be considered as limiting the scope of any of the disclosed inventions, currently described embodiments and/or examples, and currently understood best modes of these inventions.

FIG. 1 is a schematic view of a ball valve according to one or more embodiments not comprising the claimed feature according to which a projection of the inner peripheral wall of the end cover toward the limiting member is capable of covering the limiting member.

FIG. 2 is a schematic view of a ball valve from another perspective according to one or more embodiments.

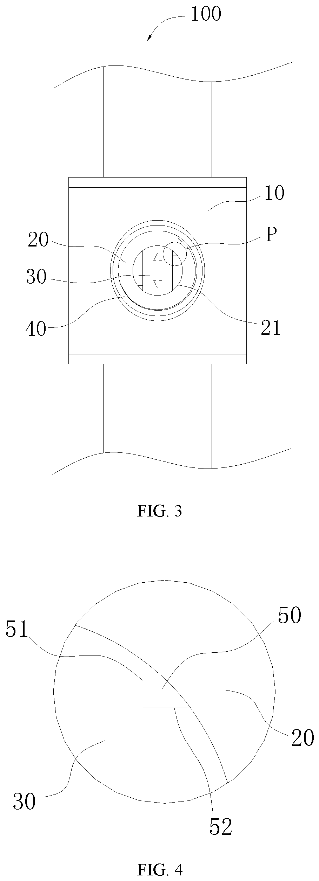

FIG. 3 is a partial view of a ball valve from other perspectives according to one or more embodiments not comprising the claimed feature according to which a projection of the inner peripheral wall of the end cover toward the limiting member is capable of covering the limiting member.

FIG. 4 is an enlarged view of P part in FIG. 3.

FIG. 5 is a schematic view of a valve rod and a limiting member assembled on an inner peripheral wall of an end cover according to one or more embodiments.

FIG. 6 is a sectional view of a ball valve according to one or more embodiments not comprising the claimed feature according to which a projection of the inner peripheral wall of the end cover toward the limiting member is capable of covering the limiting member.

In the figures, 100 represents a ball valve; 10 represents a valve body; 20 represents an end cover; 21 represents an inner peripheral wall; 30 represents a valve rod; 31 represents a first step surface; 32 represents a second step surface; 40 represents a valve seat; 50 represents a limiting member; 51 represents a first abutting surface; and 52 represents a second abutting surface.

## DETAILED DESCRIPTION

The technical solutions in the embodiments of this application will be clearly and completely described below with reference to the accompanying drawings in the embodiments of this application. It is obvious that the described embodiments are only a part of the embodiments, but not all of the embodiments. All other embodiments obtained by a person of ordinary skill in the art based on the embodiments of the present application without creative efforts shall fall within the protection scope of the present application as defined by the appended claims.

It should be noted that when the component is referred to as being "mounted to" another component, it may be directly on the other component or may also be an intervening component. When one component is considered to be "disposed on" another component, it may be directly disposed on another component or there may be an intervening component simultaneously. When one component is considered to be "fixed to" another component, it may be directly fixed on another component or there may be an intervening component at the same time.

Unless otherwise defined, all technical and scientific terms used herein have the same meaning as commonly understood by one skilled in the art to which this application belongs. The terminology used herein in the specification of the present application is for the purpose of describing particular embodiments only and is not intended to be limiting of the present application. As used herein, the terms "or/and" include any and all combinations of one or more of the associated listed items.

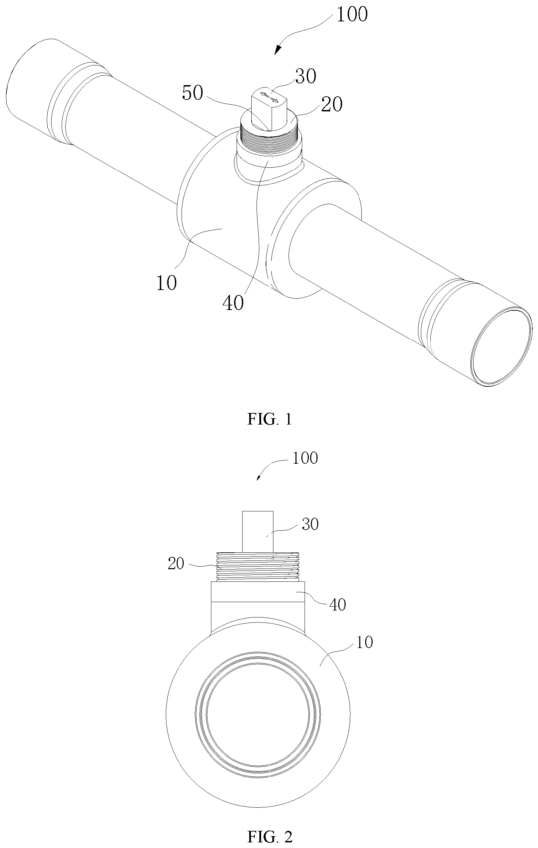

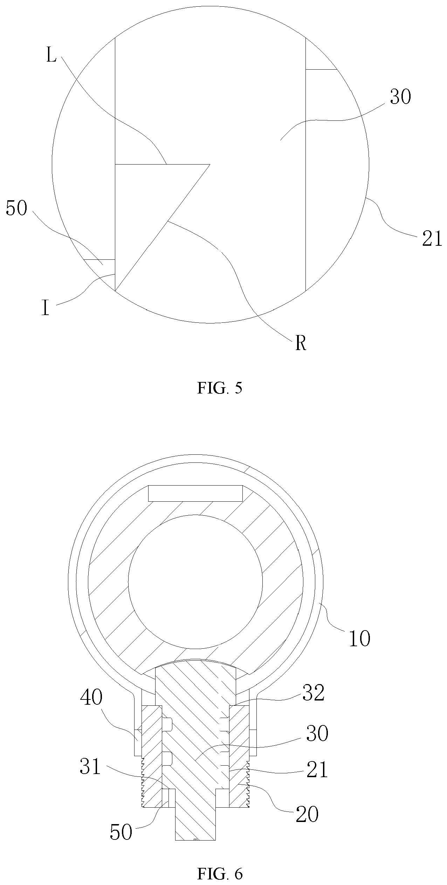

Referring to FIG. 1 and FIG. 6, in an embodiment not comprising the claimed feature according to which a projection of the inner peripheral wall of the end cover toward the limiting member is capable of covering the limiting member, the present invention provides a ball valve 100. The ball valve includes a valve body 10, an end cover 20, a valve rod 30 and a valve seat 40.

In this embodiment, the valve seat 40 is fixed on the valve body 10 by welding, and the end cover 20 is connected to the valve seat 40 by screwing, so as to realize an assembly connection of the end cover 20 on the valve body 10, which facilitates an installation of the end cover 20 on the valve body 10.

In this embodiment, one end of the valve rod 30 is rotatably installed in the valve body 10, and the other end of the valve rod 30 extends outward through the end cover 20, so that when the ball valve 100 is in operation, it is convenient to drive the valve rod 30 to rotate on the valve body 10, so as to meet an operation of opening and closing the ball valve 100. It should be noted that a ball (not shown) is connected to a part of the valve rod 30 located in the valve body 10, so that the valve rod 30 can simultaneously drive the ball to rotate in the valve body 10 and realize the on/off operation of the ball valve 100.

In this embodiment, an inner peripheral wall 21 of the end cover 20 is provided with a limiting member 50, and the valve rod 30 is capable of being limited by the limiting member 50 to allow a maximum rotating angle of the valve rod 30 in the end cover 20 to be 90 degrees. So as to meet a use requirement that the valve rod 30 is limited to rotate 90 degrees when the ball valve 100 is on and off. It should be noted that, in some embodiments, the limiting member 50 can be a block structure, which is not specifically limited here.

It can be understood that the ball valve 100 of this embodiment is provided with the limiting member 50 on the inner peripheral wall 21 of the end cover 20, then a rotation angle range of the valve rod 30 can be limited by a limiting fit between the limiting member 50 and the valve rod 30. That is, through such reasonable structural arrangement, the ball valve has advantages of simplifying a structure, reducing a processing difficulty and facilitating an installation while still meeting the requirements for limiting the rotation angle of the valve rod, thereby reducing a production cost of the ball valve 100.

In this embodiment, the valve rod 30 is capable of being limited by the limiting member 50 in a surface-to-surface contact manner, thereby improving a stability when the valve rod 30 collides with the limiting member 50, and ensuring that a maximum rotation angle of the valve rod 30 relative to the end cover 20 is 90 degrees, that is, limiting a rotation angle of the ball driven by the valve rod 30 within the valve body to be 90 degrees, so that the ball valve 100 can be stably maintained in an open or closed working state, and a working stability of the ball valve 100 is improved. It should be noted that a limiting fit between the valve rod 30 and the limiting member 50 is not limited to the manner of surface-to-surface contact shown in FIG. 5. For those skilled in the art, the valve rod 30 and the limiting member 50 can also be in a line contact with each other. That is, the valve rod 30 is capable of being limited by the limiting member 50 in a line-to-surface contact manner.

In some embodiments, the limiting member 50 is provided with a first abutting surface 51 and a second abutting surface 52, the first abutting surface 51 is perpendicular to the second abutting surface 52, the limiting member 50 is capable of being matched with two end surfaces of the valve rod 30 in a thickness direction through the first abutting surface 51 and the second abutting surface 52, respectively, so as to limit the valve rod 30. With this arrangement, it has the effects of simplifying the structure and reducing the production cost while still meeting the requirements for limiting the rotation angle of the limiting member 50 with respective to the valve rod 30.

In addition, it should be noted that, referring to FIG. 5, a width of an end surface of the limiting member 50 in this embodiment for abutting against the valve rod 30 is defined as $I$, specifically, it can be calculated by formula:

$$I = \sqrt{R^2 - L^2} - L$$, wherein $R$ is a rotation radius of the valve rod 30, and L is a half of a thickness of an end of the valve rod 30 extending out of the valve body 10. For example, referring to FIG. 5, the two end surfaces of the limiting member 50 provided in this embodiment for abutting against the valve rod 30 can be two mutually perpendicular planes, so that the limiting fit between the valve body and the limiting member is in a surface-to-surface contact manner, which makes the limitation more reliable. It can be understood that through the above-mentioned structural arrangement, a calculation of the width of the end surface of the limiting member for abutting against the valve rod can be realized, and one skilled in the art can use this formula to set a selection parameters according to an actual working conditions, which will not be described in detail here. It should be noted that the thickness of the valve rod 30 refers to a distance between two end surfaces of the valve rod 30 for abutting against the limiting member 50.

Of course, in other embodiments, the valve rod 30 can also be in cylindrical or other irregular shapes. For example, an edge of the valve rod 30 is provided with a convex edge for abutting against the limiting member 50. The limiting member 50 can abut against different edges of the valve rod 30 through the first abutting surface 51 and the second abutting surface 52, respectively. At this time, the valve rod and the limiting member are in line-to-surface contact fit, so as to limit the valve rod 30. Besides, in other embodiments, the first abutting surface 51 and the second abutting surface 52 of the limiting member can be designed as arc surfaces, and the two end surfaces of the valve rod 30 in the thickness direction are designed as planes, so as to realize line-to-surface contact fit. In this way, the valve rod 30 with different shapes can be matched and meet different application requirements while meeting the requirements for limiting the rotation angle of the limiting member 50 with respective to the valve rod 30.

In this embodiment, the number of the limiting members 50 can be one, so as to facilitate an assembly of the limiting members 50 on the inner peripheral wall 21 of the end cover 20.

In other embodiments, the number of the limiting members 50 can be two, and two limiting members 50 are symmetrically arranged with respect to an axis of the valve rod 30, so as to further enhance a reliability of the limiting members 50 in restricting the rotation angle of the valve rod 30. This configuration helps prevent phenomena that the limiting member 50 may dislodge or deform due to excessive force in a process of opening and closing the ball valve, thus avoiding any limitation failure.

Furthermore, the limiting member 50 of this embodiment is disposed on the inner peripheral wall 21 of the end cover 20 by welding. Alternatively, the limiting member 50 and the end cover 20 are connected to form an integrated structure, enabling an assembly connection between the limiting member 50 and the end cover 20. This facilitates an installation of the limiting member 50 on the inner peripheral wall 21 of the end cover 20, reducing processing steps and costs.

In this embodiment, and according to the claimed invention, a projection of the inner peripheral wall 21 of the end cover 20 to the limiting member 50 covers the limiting member 50, allowing the end cover 20 to shield and protect the limiting member 50 from being influenced by external components in the operation of the ball valve 100. Of course, although not according to the claimed invention, it should be noted that the limiting member 50 is not limited to being accommodated in the end cover 20, and it is also feasible for the limiting member 50 to partially protrude from the end cover 20, which will not be described here.

In this embodiment, the valve rod 30 is provided with a first step surface 31, and an end surface of the limiting member 50 towards the valve body 10 abuts against the first step surface 31. This configuration enables the limiting member 50 to restrict an assembly of the valve rod 30 on the end cover 20, so as to prevent the valve rod 30 from being forced out of the valve body 10 by a high-pressure medium in the valve body 10.

Furthermore, the valve rod 30 of this embodiment is provided with a second step surface 32, and the second step surface 32 abuts against an end surface of the end cover 20 towards the valve body 10. This configuration enables the end cover 20 to restrict an assembly of the valve rod 30, so as to prevent the valve rod 30 from being forced out of the valve body 10 by the high-pressure medium in the valve body 10.

In addition, it should be noted that the ball valve 100 of this embodiment can be made of stainless steel or copper, and those skilled in the art can choose as required.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention as defined by the appended claims.

**Claims**

1. A ball valve, comprising a valve body (10), an end cover (20) and a valve rod (30), wherein the end cover (20) is installed on the valve body (10), and one end of the valve rod (30) is rotatably installed in the valve body (10), the other end of the valve rod (30) extends out of the valve body (10) through the end cover (20);

   wherein a limiting member (50) is arranged on an inner peripheral wall (21) of the end cover (20), the valve rod (30) is capable of being limited by the limiting member (50) to allow a maximum rotating angle of the valve rod (30) in the end cover (20) to be 90 degrees, **characterized in that**
   a projection of the inner peripheral wall (21) of the end cover (20) toward the limiting member (50) is capable of covering the limiting member (50).

2. The ball valve of claim 1, wherein the valve rod (30) is capable of being limited by the limiting member (50) in a surface-to-surface contact manner.

3. The ball valve of claim 2, wherein the limiting member (50) is provided with a first abutting surface (51) and a second abutting surface (52), the first abutting surface (51) is perpendicular to the second abutting surface (52), the limiting member (50) is capable of limiting the valve rod (30) through the first abutting surface (51) and the second abutting surface (52) respectively.

4. The ball valve of claim 2, wherein a rotating radius of the valve rod (30) is defined as *R*, a half of a thickness of an end of the valve rod (30) extending out of the valve body (10) is defined as *L*, and a width of an end surface of the limiting member (50) for abutting against the valve rod (30) is defined as *I,* wherein, the radius *R* of rotation of the valve rod (30), the half *L* of the thickness of the end of the valve rod (30) extending out of the valve body (10) and the width *I* of the end surface of the limiting member (50) for abutting against the valve rod (30) satisfy following formula:

$$I = \sqrt{R^2 - L^2} - L.$$

5. The ball valve of claim 1, wherein the number of the limiting member (50) is one; or,
the number of the limiting member (50) is two, and the two limiting members (50) are symmetrical with respect to an axis of the valve rod (30).

6. The ball valve of claim 1, wherein the limiting member (50) is disposed on the inner peripheral wall (21) of the end cover (20) by welding; or, the limiting member (50) and the end cover (20) are an integrated structure.

7. The ball valve of claim 1, wherein the valve rod (30) is provided with a first step surface (31) and an end surface of the limiting member (50) towards the valve body (10) abuts against the first step surface (31).

8. The ball valve of claim 1, wherein the valve rod (30) is provided with a second step surface (32) and the second step surface (30) abuts against an end surface of the end cover (20) towards the valve body (10).

9. The ball valve of claim 1, wherein a valve seat (40) is fixed on the valve body (10) by welding and the end cover (20) is connected to the valve seat (40) by a threaded way.

10. The ball valve of claim 1, wherein the valve rod (30) is capable of being limited by the limiting member (50) in a line-to-surface contact manner.

## Patentansprüche

1. Kugelventil, umfassend einen Ventilkörper (10), eine Endabdeckung (20) und eine Ventilstange (30), wobei die Endabdeckung (20) auf dem Ventilkörper (10) angebracht ist und ein Ende der Ventilstange (30) drehbar im Ventilkörper (10) angebracht ist, wobei sich das andere Ende der Ventilstange (30) durch die Endabdeckung (20) aus dem Ventilkörper (10) heraus erstreckt;

wobei ein Begrenzungselement (50) an einer Innenwand (21) der Endabdeckung (20) angeordnet ist, die Ventilstange (30) in der Lage ist, durch das Begrenzungselement begrenzt zu werden, um zu ermöglichen, dass der maximale Drehwinkel der Ventilstange (30) in der Endabdeckung (20) 90 Grad beträgt,
**dadurch gekennzeichnet, dass**
ein Vorsprung der Innenumfangswand (21) der Endabdeckung (20) in Richtung des Begrenzungselements (50) das Begrenzungselement (50) abdecken kann.

2. Kugelventil nach Anspruch 1, wobei die Ventilstange (30) durch das Begrenzungselement (50) in einer Flächen-zu-Flächen-Kontaktanordnung r begrenzt werden kann.

3. Kugelventil nach Anspruch 2, wobei das Begrenzungselement (50) mit einer ersten Anlagefläche (51) und einer zweiten Anlagefläche (52) versehen ist, wobei die erste Anlagefläche (51) senkrecht zur zweiten Anlagefläche (52) steht, wobei das Begrenzungselement (50) in der Lage ist, die Ventilstange (30) durch die erste Anlagefläche (51) bzw. die zweite Anlagefläche (52) zu begrenzen.

4. Kugelventil nach Anspruch 2, wobei ein Drehradius der Ventilstange (30) als *R* definiert ist, eine Hälfte einer Dicke eines Endes der Ventilstange (30), das sich aus dem Ventilkörper (10) heraus erstreckt, als *L* definiert ist, und eine Breite einer Endfläche des Begrenzungselements (50) zum Anstoßen an die Ventilstange (30) als *I* definiert ist, wobei der Drehradius *R* der Ventilstange (30), die Hälfte *L* der Dicke des aus dem Ventilkörper (10) herausragenden Endes der Ventilstange (30) und die Breite *I* der Endfläche des Begrenzungselements (50) zum Anstoßen an die Ventilstange (30) die folgende Formel erfüllen:

$$I = \sqrt{R^2 - L^2} - L.$$

5. Kugelventil nach Anspruch 1, wobei die Anzahl der Begrenzungselemente (50) eins ist; oder
die Anzahl der Begrenzungselemente (50) zwei beträgt und die beiden Begrenzungselemente (50) symmetrisch zu einer Achse der Ventilstange (30) angeordnet sind.

6. Kugelventil nach Anspruch 1, wobei das Begrenzungselement (50) durch Schweißen an der Innenwand 1 (21) der Endabdeckung (20) angeordnet ist; oder das Begrenzungselement (50) und die Endabdeckung (20) eine integrierte Struktur bilden.

7. Kugelventil nach Anspruch 1, wobei die Ventilstange (30) mit einer ersten Stufenfläche (31) versehen ist und eine dem Ventilkörper (10) zugewandte Endfläche des Begrenzungselements (50) an der ersten Stufenfläche (31) anliegt.

8.  Kugelventil nach Anspruch 1, wobei die Ventilstange (30) mit einer zweiten Stufenfläche (32) versehen ist und die zweite Stufenfläche (30) an einer Endfläche der Endabdeckung (20) in Richtung des Ventilkörpers (10) anliegt.

9.  Kugelventil nach Anspruch 1, wobei ein Ventilsitz (40) durch Schweißen am Ventilkörper (10) befestigt ist und die Endabdeckung (20) durch ein Gewinde mit dem Ventilsitz (40) verbunden ist.

10. Kugelventil nach Anspruch 1, wobei die Ventilstange (30) durch das Begrenzungselement (50) in einer Linie-zu-Fläche-Kontaktweise begrenzt werden kann.


## Revendications

1.  Vanne à bille, comprenant un corps de vanne (10), un couvercle d'extrémité (20) et une tige de vanne (30), dans laquelle le couvercle d'extrémité (20) est installé sur le corps de vanne (10), et une extrémité de la tige de vanne (30) est installée de manière rotative dans le corps de vanne (10), l'autre extrémité de la tige de vanne (30) s'étendant hors du corps de vanne (10) à travers le couvercle d'extrémité (20);

    dans laquelle un élément de limitation (50) est disposé sur une paroi périphérique interne (21) du couvercle d'extrémité (20), la tige de vanne (30) est capable d' être limitée par l'élément de limitation (50) afin de permettre un angle de rotation maximal de la tige de vanne (30) dans le couvercle d'extrémité (20) de 90 degrés , **caractérisée en ce que**
    une saillie de la paroi périphérique intérieure (21) du couvercle d'extrémité (20) vers l'élément de limitation (50) est capable de recouvrir l'élément de limitation (50).

2.  La vanne à bille selon la revendication 1, dans laquelle la tige de soupape (30) peut être limitée par l'élément de limitation (50) dans un mode de contact surface à surface r .

3.  La vanne à bille selon la revendication 2, dans laquelle l'élément de limitation (50) est muni d'une première surface de butée (51) et d'une deuxième surface de butée (52), la première surface de butée (51) étant perpendiculaire à la deuxième surface de butée (52), l'élément de limitation (50) étant capable de limiter la tige de soupape (30) respectivement par l'intermédiaire de la première surface de butée (51) et de la deuxième surface de butée (52).

4.  La vanne à bille selon la revendication 2, dans laquelle un rayon de rotation de la tige de vanne (30) est défini comme *R*, l' e moitié de l'épaisseur d'une extrémité de la tige de vanne (30) s'étendant hors du corps de vanne (10) est définie comme *L*, et la largeur d'une surface d'extrémité de l'élément de limitation (50) destiné à venir en butée contre la tige de soupape (30) est définie comme *I*, dans laquelle le rayon R de rotation de la tige de soupape (30), la moitié L de l'épaisseur de l'extrémité de la tige de soupape (30) s'étendant hors du corps de soupape (10) et la largeur *I* de la surface d'extrémité de l'élément de limitation (50) destiné à venir en butée contre la tige de soupape (30) satisfont à la formule suivante :

$$I = \sqrt{R^2 - L^2} - L.$$

5.  La vanne à bille selon la revendication 1, dans laquelle le nombre d'éléments de limitation (50) est égal à un; ou
    le nombre d'éléments de limitation (50) est de deux, et les deux éléments de limitation (50) sont symétriques par rapport à un axe de la tige de soupape (30).

6.  La vanne à bille selon la revendication 1, dans laquelle l'élément de limitation (50) est disposé sur la paroi périphérique interne 1 (21) du couvercle d'extrémité (20) par soudage; ou bien, l'élément de limitation (50) et le couvercle d'extrémité (20) forment une structure intégrée.

7.  La vanne à bille selon la revendication 1, dans laqu , la tige de vanne (30) est pourvue d'une première surface en gradin (31) et une surface d'extrémité de l'élément de limitation (50) vers le corps de vanne (10) vient en butée contre la première surface en gradin (31).

8.  La vanne à bille selon la revendication 1, dans laquelle la tige de vanne (30) est pourvue d'une deuxième surface en gradins (32) et la deuxième surface en gradins (30) vient en butée contre une surface d'extrémité du couvercle d'extrémité (20) vers le corps de vanne (10).

9.  La vanne à bille selon la revendication 1, dans laquelle un siège de vanne (40) est fixé sur le corps de vanne (10) par soudage et le couvercle d'extrémité (20) est relié au siège de vanne (40) par un moyen fileté.

**10.** La vanne à bille selon la revendication 1, dans laquelle la tige de vanne (30) peut être limitée par l'élément de limitation (50) selon un mode de contact ligne-surface.

FIG. 1

FIG. 2

FIG. 3

FIG. 4

FIG. 5

FIG. 6

**EP 4 403 808 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202122654724
- KR 200319367 Y1
- CN 101392841 A
- CN 201339725 Y
- CN 101285529 A
- CN 102287569 A